# EUROPEAN PATENT APPLICATION

(11) **EP 0 973 112 A2**
(43) Date of publication of application: **19.01.2000**
(21) Application number: 99305341.2
(22) Date of filing: 06.07.1999
(51) Int. Cl.: G06F 17/60

(54) **System and method of managing competitive price information**

(30) Priority: 15.07.1998 US 115822
(71) Applicant: NCR INTERNATIONAL INC., Dayton, Ohio 45479 (US)
(72) Inventor: Goodwin 111, John Coker, Suwanee, Georgia 30024 (US)
(74) Representative: Cleary, Fidelma

(57) **Abstract**

A system and method of managing competitive price information adjusts prices which are higher than competitive prices and displays a promotional message if prices are lower than competitive prices. The system includes a plurality of electronic price labels (22) associated with a plurality of items for displaying price information about the items, a storage medium (36) comprising competitive price data files (34) containing item identification data and a competitor price for each of the items, and a computer (12) which obtains the competitor prices from the competitive price data files (34), reads current prices of the items from a price look-up (PLU) data file (44), determines whether the current prices are greater than the competitor prices and, for each current price which is greater than the corresponding competitor price, changes the current price in the PLU data file (44) to a new price based upon predetermined rules, and sends a message to the EPL (22) associated with the item to display the new price.

## Description

The present invention relates to electronic price label (EPL) systems and, more specifically, to a system and method of managing competitive price information.

Point-of-sale (POS) transaction processing systems typically include a price look-up (PLU) file which contains item identification information and item price information.

EPL systems typically include a plurality of EPLs for merchandise items in a transaction establishment. EPLs typically display the price of corresponding merchandise items on store shelves and are typically attached to a rail along the leading edge of the shelves. A transaction establishment may contain thousands of EPLs to display the prices of the merchandise items. The EPLs are coupled to a central server from where information about the EPLs is typically maintained in an EPL data file. Price information displayed by the EPLs is obtained from the PLU data file and stored within an EPL price change record.

Current POS systems are not equipped quickly to react to competitive price information. Retailers are generally aware of what their competitors are charging for similar goods. But price changes and price promotion are handled manually. For example, manually placed printed shelf talkers are often used to promote a particular merchandise item as being cheaper than a competitor's offering. Messages such as "compare and save 40¢" may appear on the shelf talkers.

Therefore, it would be desirable to provide a system and method of managing competitive price information which automatically applies necessary price changes and promotional messages following collection of the competitive price information.

Accordingly, it is an object of the present invention to provide a system and method of managing competitive price information. More particularly, it is an object to provide such a system and method which employ an electronic price label (EPL) system to change prices and display promotional messages.

The system of the invention includes a plurality of electronic price labels associated with a plurality of items for displaying price information about the items, a storage medium containing a number of competitive price data files containing an item identification number or other identification data and a competitor price for each of the items, and a computer which obtains the competitor prices from the competitive price data files, reads current prices of the items from a price look-up (PLU) data file, determines whether the current prices are greater than the competitor prices and, for each current price which is greater than the corresponding competitor price, changes the current price in the PLU data file to a new price based upon predetermined rules, and sends a message to the EPL associated with the item to display the new price.

The method of the invention includes the steps of creating a competitive price data file containing an item identification number and a competitor price for the item, obtaining the competitor price from the competitive price data file, reading a current price of the item from a price look-up (PLU) data file, determining whether the current price is greater than the competitor price and, if the current price is greater than the competitor price, changing the current price in the PLU data file to a new price based upon predetermined rules, and sending a message to an EPL associated with the item to display the new price. According to one embodiment of the invention, each item may be processed one at a time. Alternatively, each competitor may be processed one competitor at a time.

In order that the present invention may be more readily understood, reference will now be made to the accompanying drawings, in which:-
Fig. 1 is a block diagram of a transaction processing system embodying the invention;
Fig. 2 is a diagram showing price and electronic price label data files used within a transaction establishment;
Figs. 3A-3C are diagrams showing competitive price data files used within a transaction establishment;
Figs. 4A-4B form a flow diagram illustrating a first embodiment of the method of the invention; and
Figs. 5A-5B form a flow diagram illustrating a second embodiment of the method of the invention.

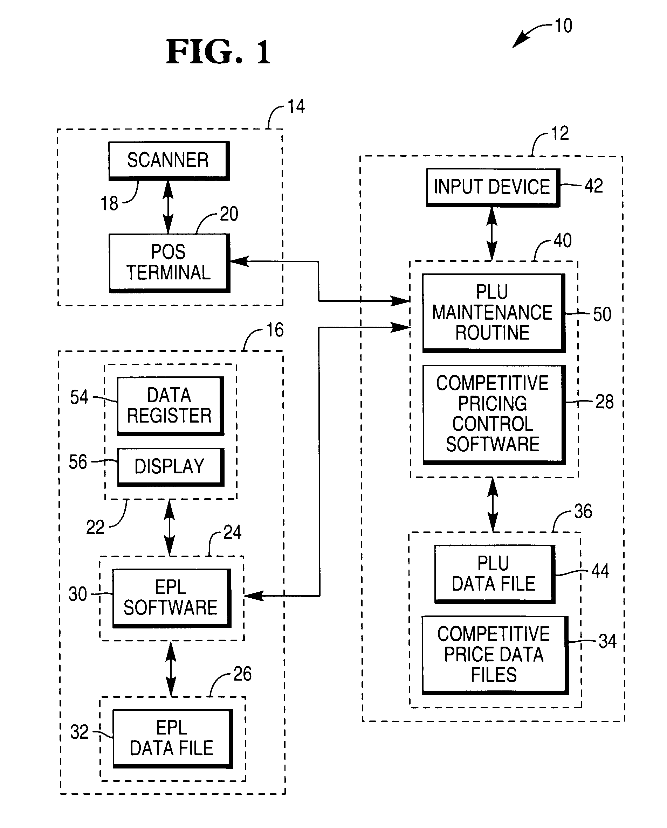

Referring to Fig. 1 of the accompanying drawings, transaction system 10 primarily includes host computer system 12, point-of-sale (POS) system 14 and EPL system 16. Herein, components 12 and 14 are shown as separate components that are networked together, but they may also form a single component. Thus, host computer system 12 may be a POS terminal which doubles as a host computer for a network of other POS terminals.

POS system 14 includes bar code reader 18 and terminal 20.

EPL system 16 primarily includes EPLs 22, host EPL terminal 24 and EPL storage medium 26.

EPLs 22 include a data register 54 and a display 56. Data registers 54 contain data, usually price data, sent from EPL software 30. The data is typically displayed by displays 56.

Host EPL terminal 24 executes EPL software 30. To assist with execution of certain tasks performed by EPL software 30, EPL terminal 24 includes a built-in time keeping device, commonly referred to as a system clock, which is synchronized with current time in order automatically to execute the tasks at their scheduled times.

EPL software 30 is responsible for scheduling and transmitting price data from EPL data file 32 to EPLs 22. EPL software 30 obtains prices in PLU data file 44 as they are entered in input device 42 (immediate processing) or after they have been stored within price look-up (PLU) data file 44. EPL software 30 also schedules and transmits daily price data under the control of daily price change data management software 28.

EPL storage medium 26 stores EPL data file 32 and is preferably a fixed disk drive. EPL data file 32 contains EPL identification and price checksum information. Price checksum information is calculated from price information in PLU data file 44. EPL data file 32 contains current information displayed by EPLs 22.

Host computer system 12 includes PLU storage medium 36, host PLU terminal 40 and input device 42.

Host PLU terminal 40 executes PLU maintenance routine 50 and competitive pricing control software 28. PLU maintenance routine 50 updates PLU data file 44 upon operator input.

Competitive pricing control software 28 reads PLU data file 44 and competitive price data file 34 and automatically changes prices and displays promotional messages as necessary. For example, in transaction establishments which wish to sell at the lowest advertised price, competitive pricing control software 28 lowers prices of items within PLU data file 44 which are above competitor prices. Competitive pricing control software 28 further instructs EPL control software 30 to change displayed price information for those items. If prices are below competitor prices, competitive pricing control software 28 automatically calculates the cost savings and causes EPL control software 30 to display a promotional message, such as "compare and save", and the calculated cost savings.

PLU storage medium 36 stores PLU data file 44 and competitive price data file 34. PLU data file 44 is available for distribution to POS terminal 20. Provision may be made for direct access to PLU data file 44 by bar code reader 18.

Competitive price data file 34 includes item identification information and price information accumulated by visiting transaction establishments operated by competitors.

Input device 42 is preferably a keyboard, but any manner of entering competitive price information is envisioned, including an image scanner and optical character recognition software for recording printed price information, and a hand-held terminal device with a bar code reader for reading and storing bar code information from merchandise items and recording price information entered via a keypad.

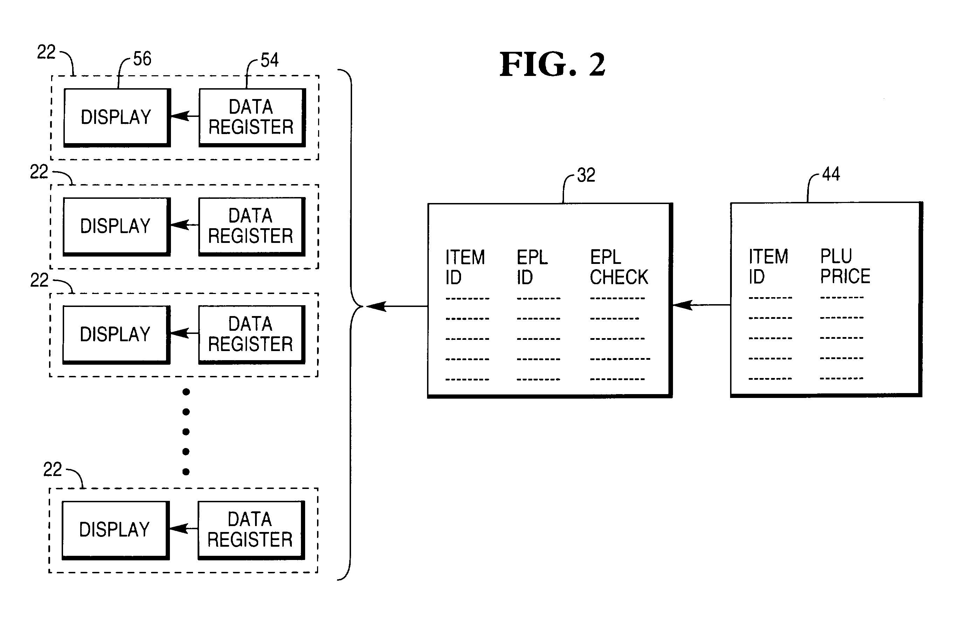

Turning now to Fig. 2, EPL data file 32 and PLU data file 44 are shown in more detail.

EPL data file 32 includes a line entry for each EPL 22 in EPL system 16. Each line entry has an item identification entry (ITEM ID), an EPL identification entry (EPL ID) and an EPL price checksum value entry (EPL CHECK).

Entry ITEM ID identifies a store item. Entry EPL ID identifies which EPL is assigned to the item. Entry EPL CHECK is a checksum value of the digits of the price information that is displayed by display 56.

PLU data file 44 includes a line entry for each item sold in the transaction establishment. Each line entry has at least an item identification entry (ITEM ID) and a PLU price entry (PLU PRICE).

Entry ITEM ID identifies a store item. Entry PLU PRICE identifies the price read by POS system 14 to determine the price of each item during scanning by bar code reader 18.

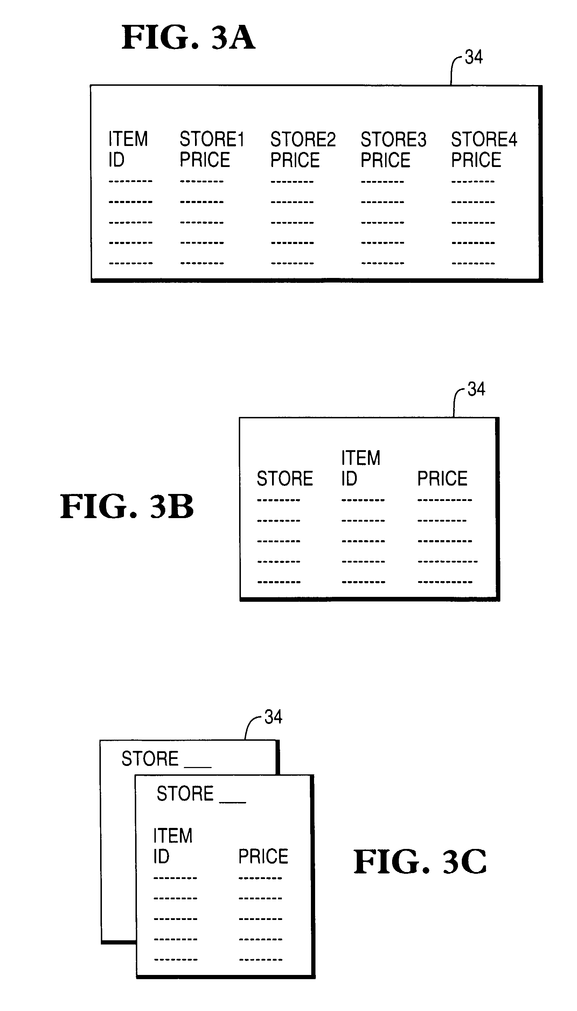

Turning now to Figs. 3A-3C, three different methods of storing competitive price data in competitive price data file 34 are shown. Although only three are illustrated, other methods of storing competitive price data are envisioned by the present invention.

In Fig. 3A, a single competitive price data file 34 contains price data for a plurality of transaction establishments indexed by store item. Entry ITEM ID identifies a store item. Entries STORE1-4 identify the prices for the store item charged by transaction establishments 1-4.

In Fig. 3B, price data, item identification data and transaction establishment identification data are integrated into a single competitive price data file 34. Entry STORE identifies the transaction establishment. Entry ITEM ID identifies a store item. Entry PRICE identifies the price for the store item.

In Fig. 3C, separate competitive price data files 34 for each transaction establishment contain item identification data and price data for each transaction establishment. Entry STORE identifies the transaction establishment. Entry ITEM ID identifies a store item. Entry PRICE identifies the price for the store item.

During normal operation, competitive price information is gathered by visiting other transaction establishments, as often as desired, even once a week. The competitive price information is stored within competitive price data file 34. Competitive pricing control software 28 compares price data from each competitor with price data in PLU data file 44. Competitive pricing control software 28 may be configured automatically to apply price changes and cause EPLs associated with certain items to display promotional messages, including flashing and blinking messages. Following execution, competitive pricing control software 28 may purge the price data in competitive price data file 34 or keep it for a later analysis of competitor pricing trends.

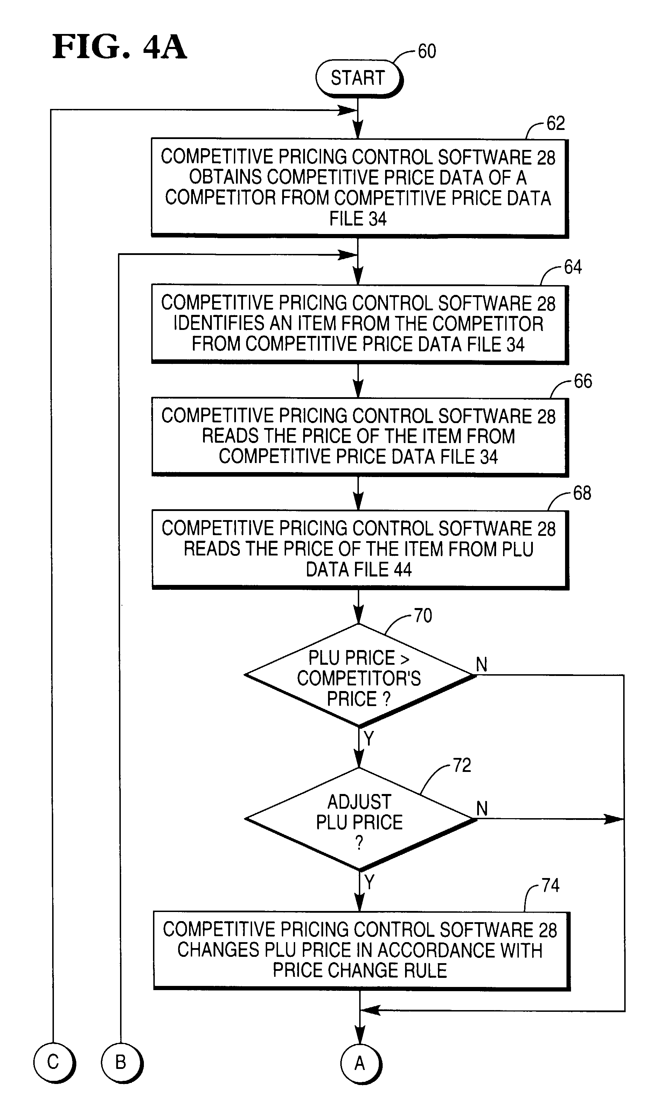

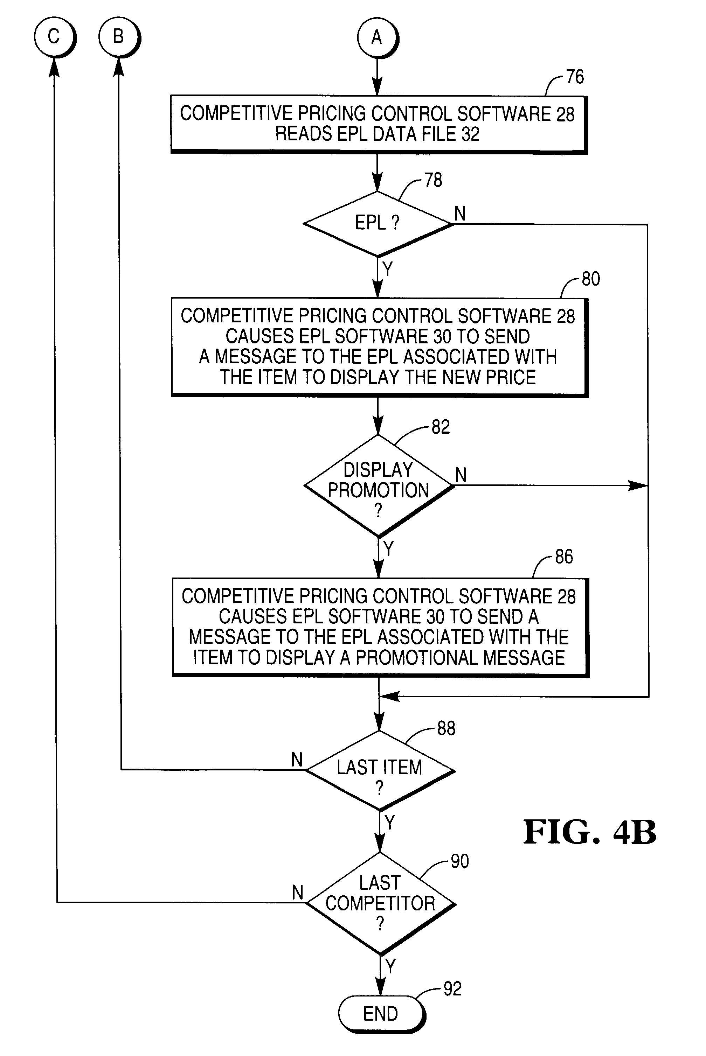

Turning now to Figs. 4A-4B, a first embodiment of the method of operation of competitive pricing control software 28 is discussed in detail beginning with START 60. This embodiment involves examining item price information from one competitor at a time.

In step 62, competitive pricing control software 28 obtains competitive price data of a competitor from competitive price data file 34.

In step 64, competitive pricing control software 28 identifies an item from the competitor from competitive price data file 34.

In step 66, competitive pricing control software 28 reads the price of the item from competitive price data file 34.

In step 68, competitive pricing control software 28 reads the price of the item from PLU data file 44.

In step 70, competitive pricing control software 28 determines whether the PLU price is greater than the competitor's price. If not, then operation proceeds to step 76. If so, operation continues at step 72.

In step 72, competitive pricing control software 28 determines whether the PLU price should be adjusted for the item. Whether to adjust the PLU price and, if so, by how much, may be predetermined on an item-by-item, competitor-by-competitor, or global basis. For example, a transaction establishment which claims to have the lowest prices may wish always to adjust PLU prices at or below the lowest competitor price. If the PLU price is already at or below the lowest competitor price, then the transaction establishment may not wish to adjust the PLU price any further.

If predetermined settings dictate that competitive pricing control software 28 adjust the PLU price, then operation proceeds to step 74, in which competitive pricing control software 28 adjusts the PLU price. Operation proceeds to step 76.

If, based upon predetermined settings, competitive pricing control software 28 does not adjust the PLU price, then operation proceeds to step 76.

In step 76, competitive pricing control software 28 reads EPL data file 32.

In step 78, competitive pricing control software 28 determines whether an EPL is associated with the item. If not, then operation proceeds to step 88. If so, operation continues at step 80.

In step 80, competitive pricing control software 28 causes EPL software 30 to send a message to the EPL to display the new price.

In step 82, competitive pricing control software 28 determines whether to display a promotional message. Whether to display a promotional message and, if so, which promotional message, may be predetermined on an item-by-item, competitor-by-competitor, or global basis. For example, a transaction establishment may wish to calculate the difference between the PLU price and the competitor price and display the message "compare and save" and the price difference. The message could be flashed or blinked as well.

If predetermined settings dictate that the EPL display a promotional message, competitive pricing control software 28 causes EPL software 30 to send a message to the EPL to display the promotional message in step 86.
Operation proceeds to step 88.

If, based upon predetermined settings, competitive pricing control software 28 does not display a promotional message, then operation proceeds to step 88.

In step 88, competitive pricing control software 28 determines whether the item is the last item of the competitor. If not, operation returns to step 64. If so, operation proceeds to step 90.

In step 90, competitive pricing control software 28 determines whether the competitor is the last competitor. If not, operation returns to step 62. If so, operation ends at step 92.

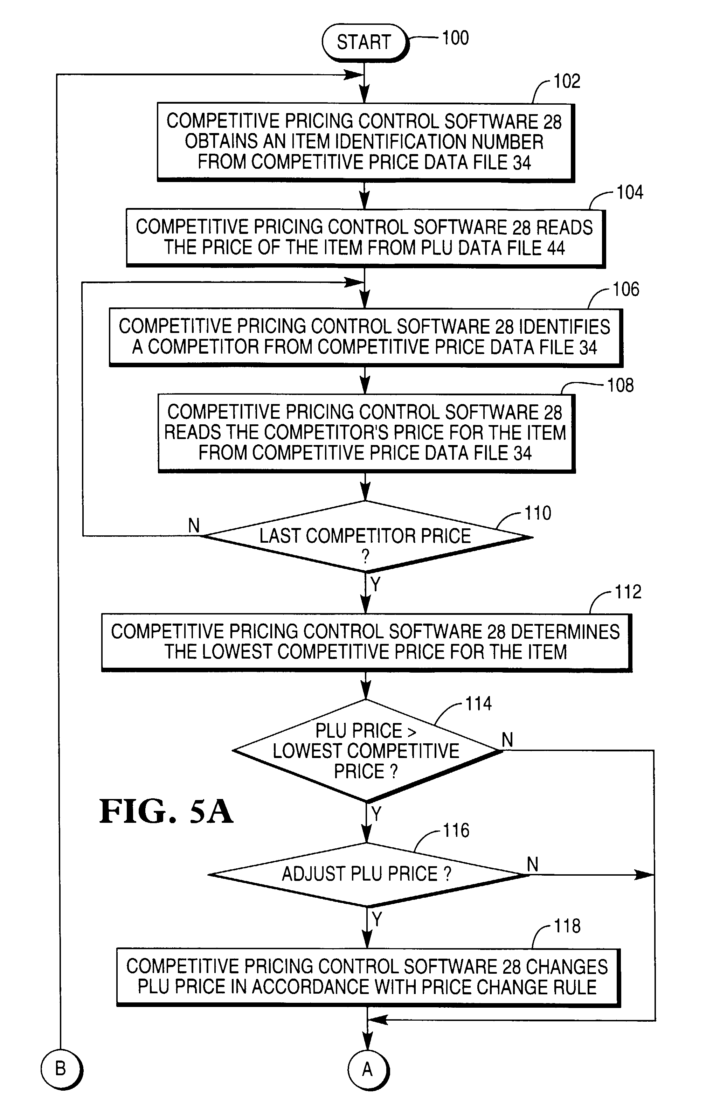

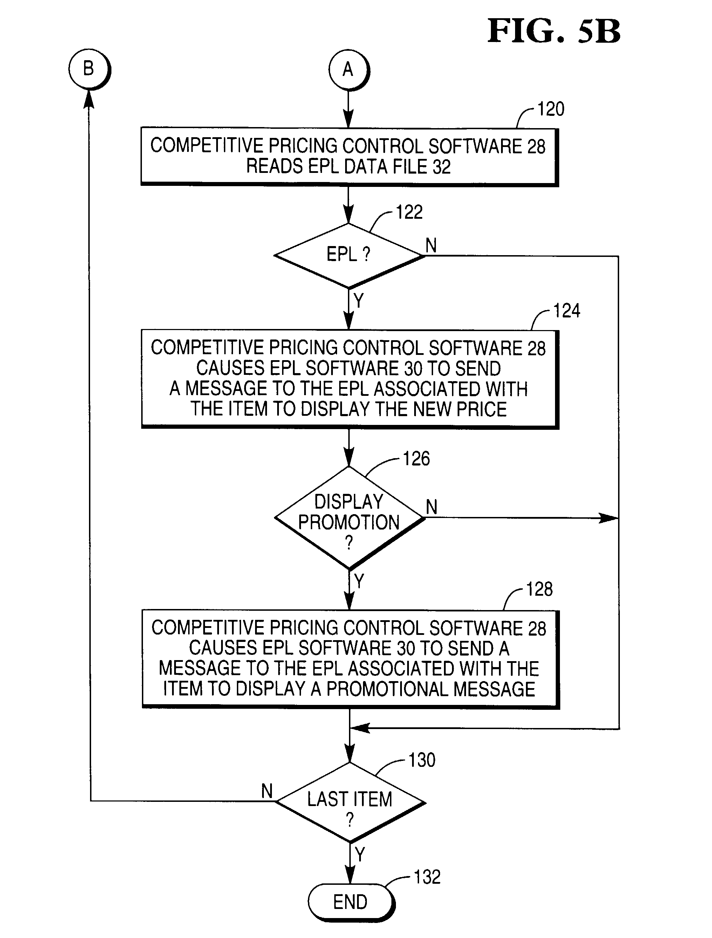

Turning now to Figs. 5A-5B, a second embodiment of the method of operation of competitive pricing control software 28 is discussed in detail beginning with START 100. This embodiment involves examining item price information from all competitors, one item at a time.

In step 102, competitive pricing control software 28 obtains an item identification number from competitive price data file 34.

In step 104, competitive pricing control software 28 reads the price of the item from PLU data file 44.

In step 106, competitive pricing control software 28 identifies a competitor from competitive price data file 34.

In step 108, competitive pricing control software 28 reads the competitor's price for the item from competitive price data file 34.

In step 110, competitive pricing control software 28 determines whether the competitor is the last competitor for which competitive price information for the item is available. If not, operation proceeds to step 106. If so, operation continues at step 112.

In step 112, competitive pricing control software 28 determines the lowest competitive price for the item.

In step 114, competitive pricing control software 28 determines whether the PLU price is greater than the lowest competitive price. If not, then operation proceeds to step 120. If so, operation continues at step 116.

In step 116, competitive pricing control software 28 determines whether the PLU price should be adjusted for the item. If predetermined settings dictate that competitive pricing control software 28 adjust the PLU price, then operation proceeds to step 118, in which competitive pricing control software 28 adjusts the PLU price. Operation proceeds to step 120.

If, based upon predetermined settings, competitive pricing control software 28 does not adjust the PLU price, then operation proceeds to step 120.

In step 120, competitive pricing control software 28 reads EPL data file 32.

In step 122, competitive pricing control software 28 determines whether an EPL is associated with the item. If not, then operation proceeds to step 130. If so, operation continues at step 124.

In step 124, competitive pricing control software 28 causes EPL software 30 to send a message to the EPL to display the new price.

In step 126, competitive pricing control software 28 determines whether to display a promotional message. If predetermined settings dictate that the EPL display a promotional message, competitive pricing control software 28 causes EPL software 30 to send a message to the EPL to display the promotional message in step 128. Operation proceeds to step 130.

If, based upon predetermined settings, competitive pricing control software 28 does not display a promotional message, then operation proceeds to step 130.

In step 130, competitive pricing control software 28 determines whether the item is the last item in competitive price data file 34. If not, operation returns to step 102. If so, operation ends at step 132.

Advantageously, competitive price control software 28 automates management of competitive prices so that PLU prices can be quickly compared and changed, if necessary.

## Claims

1. A method of managing competitive price information for an item, characterised by the steps of:
creating a competitive price data file (34) containing item identification data and a competitor price for the item;
obtaining the competitor price from the competitive price data file;
reading a current price of the item from a price look-up (PLU) data file (44);
determining whether the current price is greater than the competitor price; and
if the current price is greater than the competitor price,
changing the current price in the PLU data file (44) to a new price based upon predetermined rules; and
sending a message to an EPL (22) associated with the item to display the new price.

2. The method according to claim 1,
characterised by the steps of, if the current price is less than the competitor price, determining a difference amount between the competitor price and the current price, and sending a message to the EPL (22) associated with the item to display a promotional message containing the difference amount.

3. The method according to claim 1 for managing competitive price information for a plurality of items and a plurality of competitors, characterised by the steps of:
creating one or more competitive price data files (34) containing item identification data and competitor prices for each item and each competitor;
identifying a first competitor and first items sold by the first competitor from the competitive price data file(s);
reading first competitor prices for the first items from the competitive price data file(s);
reading current prices of the first items from a price look-up (PLU) data file (44);
determining whether the current prices are greater than the first competitor prices;
for each item whose current price is greater than the corresponding first competitor price,
changing the current price in the PLU data file (44) to a new price based upon predetermined rules, and
sending a message to an EPL (22) associated with the item to display the new price; and
for each item whose current price is less than the corresponding first competitor price,
determining a difference amount between the first competitor price and the current price, and
sending a message to the EPL (22) associated with the item to display a promotional message containing the difference amount.

4. The method according to claim 1 for managing competitive price information for a plurality of items and a plurality of competitors, characterised by the steps of:
creating one or more competitive price data files (34) containing item identification data and competitor prices for each item and each competitor;
identifying a first item sold by the competitors from the competitive price data file(s);
reading the competitor prices for the items from the competitive price data file(s);
determining a lowest competitor price from the competitor prices;
reading a current price of the item from a price look-up (PLU) data file (44);
determining whether the current price is greater than the lowest competitor price;
if the current price is greater than the lowest competitor price,
changing the current price in the PLU data file (44) to a new price based upon predetermined rules, and
sending a message to an EPL (22) associated with the item to display the new price; and
if the current price is less than the lowest competitor price,
determining a difference amount between the lowest competitor price and the current price, and
sending a message to the EPL (22) associated with the item to display a promotional message containing the difference amount.

5. An electronic price label system (10) characterised by:
a plurality of electronic price labels (22) associated with a plurality of items for displaying price information about the items;
a storage medium (36) containing one or more competitive price data files (34) containing item identification data and a competitor price for each of the items;
a computer (12) which obtains the competitor prices from the competitive price data file(s), reads current prices of the items from a price look-up (PLU) data file (44), determines whether the current prices are greater than the competitor prices and, for each current price which is greater than the corresponding competitor price, changes the current price in the PLU data file (44) to a new price based upon predetermined rules, and sends a message to the EPL (22) associated with the item to display the new price.

6. The system according to claim 5,
characterised in that the computer (12) also determines a difference amount between the competitor price and the current price for each item and sends a message to the EPL (22) associated with the item to display a promotional message containing the difference amount for each current price which is less than the corresponding competitor price.
